# EUROPEAN PATENT APPLICATION

(11) **EP 3 029 948 A1**
(43) Date of publication of application: **08.06.2016**
(21) Application number: 14195986.6
(22) Date of filing: 03.12.2014
(51) Int. Cl.: H04N 21/4722, H04N 21/478, H04N 21/81, H04N 21/431, H04N 21/434

(54) **Device and method for activating interactive applications**

(71) Applicant: TP Vision Holding B.V., 1097 JB Amsterdam (NL)
(72) Inventor: Kasala Shanmugasundaram, Hemakumar, 560045 Nagawara, Bangalore (IN)
(74) Representative: DREISS Patentanwälte PartG mbB

(57) **Abstract**

The method of activating interactive applications of the invention comprises the steps of allowing (31) a user to select a first broadcast channel, tuning (33) to said first broadcast channel, allowing (35) a user to select a first interactive application being broadcast on said first broadcast channel for inclusion in a list of interactive applications, creating (37) a new entry in said list of interactive applications, said new entry comprising an identifier of said first broadcast channel and an identifier of said first interactive application, allowing (39) said user to select a second interactive application from said list of interactive applications, said list of interactive applications comprising said first application and at least one further interactive application broadcast on a further broadcast channel different from said first broadcast channel, obtaining (43) a channel identifier associated with said second interactive application from said list of interactive applications, obtaining (45) an application identifier associated with said second interactive application from said list of interactive applications, tuning (47) to said second broadcast channel using said channel identifier, and activating (49) said second interactive application on said tuned second broadcast channel using said application identifier.

## Description

### Field of the invention

The invention relates to a device for activating interactive applications.

The invention further relates to a method of activating interactive applications.

The invention also relates to a computer program product enabling a programmable device to perform a method of activating interactive applications.

### Background of the invention

Interactive broadcast applications that can be activated are known from standards such as HbbTV, MHP, GINGA and MHEG-5. A user of a device conforming to one of those standards can activate an interactive application, e.g. a catch-up TV application, that is broadcast on a broadcast channel, for example by pressing a certain button on a remote control while watching that channel.

A drawback of current devices conforming to one of these standards is that a user needs remember on which broadcast channel a certain interactive application is broadcast before he can activate the application.

### Summary of the invention

It is a first object of the invention to provide a device for activating interactive applications, which does not require the user to remember on which broadcast channel a certain interactive application is broadcast.

It is a second object of the invention to provide a method of activating interactive applications, which does not require the user to remember on which broadcast channel a certain interactive application is broadcast.

According to the invention, the first object is realized in that the device for activating interactive applications comprises a tuner for tuning to a broadcast channel, a user input receiving means and a processor operative to use said user input receiving means to allow a user to select a first broadcast channel, use said tuner to tune to said first broadcast channel, use said user input receiving means to allow a user to select a first interactive application being broadcast on said first broadcast channel for inclusion in a list of interactive applications, create a new entry in said list of interactive applications, said new entry comprising an identifier of said first broadcast channel and an identifier of said first interactive application, use said user input receiving means to allow said user to select a second interactive application from said list of interactive applications, said list of interactive applications comprising said first and at least one further interactive application broadcast on a further broadcast channel different from said first broadcast channel, obtain a channel identifier associated with said second interactive application from said list of interactive applications, obtain an application identifier associated with said second interactive application from said list of interactive applications, use said tuner to tune to said second broadcast channel using said channel identifier, and activate said second interactive application on said tuned second broadcast channel using said application identifier. The second interactive application may be the first interactive application or the further interactive application, for example.

With the device of the invention, a user can organize interactive applications broadcast on multiple channels and optionally non-broadcast interactive applications in one list. The user no longer needs to remember on which broadcast channel a certain interactive application is broadcast, but simply selects the certain interactive application from the list and if the selected interactive application is a broadcast application, the device automatically tunes to the associated broadcast channel and activates the interactive application.

Said identifier of said first broadcast channel may comprise tuning parameters which include frequency, bandwidth, modulation, symbol rate, ONID, TSID and Service_id. These tuning parameters uniquely identify cable and terrestrial channels.

Said tuning parameters may further include orbital position and polarization. With these additional tuning parameters, satellite channels can be uniquely identified.

Said identifier of said first interactive application may comprise contents of an application_identifier() field within the application_information_section() signaled within the Program Map Table of said first broadcast channel. The contents of this field allow an application broadcast on a DVB channel to be identified. A Program Map Table is included in a MPEG- compliant transport stream belonging to a particular program.

Said new entry may further comprise at least one of a graphical representation of the opening page of said first interactive application and a logo of said first broadcast channel. This graphical representation and/or channel logo can be displayed in the application overview representing the list of applications. This allows the user to quickly identify an application that he is looking for or that may be interesting to him from the list. Alternatively, said new entry may comprise a textual representation.

Said processor may further be operative to detect whether tuning parameters of said first broadcast channel have changed and update said identifier of said first broadcast channel when said tuning parameters of said first broadcast channel have changed. Tuning parameters of a channel may be changed by an operator once in a while (e.g. when a channel is moved to a different transponder) and such a change is often communicated by the operator to consumer devices in an update of the channel map used by the consumer devices. The same changes need to be applied to the entries in the list of applications.

According to the invention, the second object is realized in that the method for activating interactive applications comprises the steps of allowing a user to select a first broadcast channel, tuning to said first broadcast channel, allowing a user to select a first interactive application being broadcast on said first broadcast channel for inclusion in a list of interactive applications, creating a new entry in said list of interactive applications, said new entry comprising an identifier of said first broadcast channel and an identifier of said first interactive application, allowing said user to select a second interactive application from said list of interactive applications, said list of interactive applications comprising said first application and at least one further interactive application broadcast on a further broadcast channel different from said first broadcast channel, obtaining a channel identifier associated with said second interactive application from said list of interactive applications, obtaining an application identifier associated with said second interactive application from said list of interactive applications, tuning to said second broadcast channel using said channel identifier, and activating said second interactive application on said tuned second broadcast channel using said application identifier.

### Brief description of the Drawings

These and other aspects of the invention are apparent from and will be further elucidated, by way of example, with reference to the drawings, in which:
- Fig.1 is a block diagram of the device of the invention;
- Fig.2 is a flow diagram of the method of the invention; and
- Fig.3 is a flow diagram of an embodiment of the method of the invention.

Corresponding elements in the drawings are denoted by the same reference numeral.

### Detailed description of the Drawings

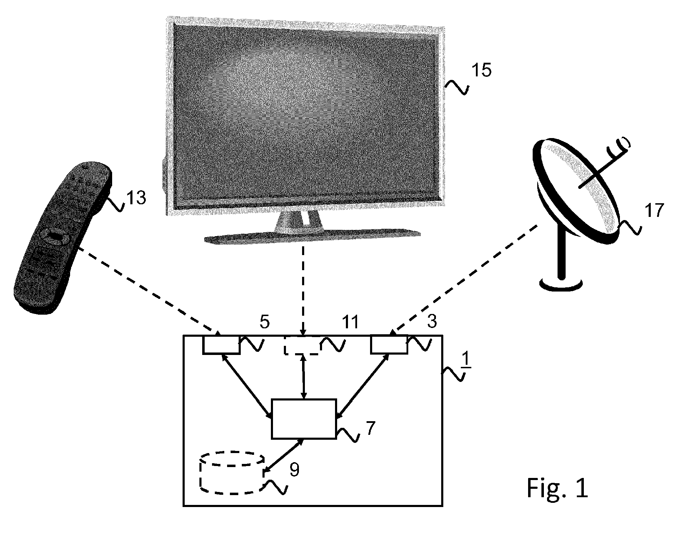

The device 1 for activating interactive applications comprises a tuner 3 for tuning to a broadcast channel, a user input receiving means 5 and a processor 7, see Fig.1. The processor 7 is operative to use said user input receiving means 5 to allow a user to select a first broadcast channel. The processor 7 is further operative to use said tuner 3 to tune to said first broadcast channel. The processor 7 is further operative to use said user input receiving means 5 to allow a user to select a first interactive application being broadcast on said first broadcast channel for inclusion in a list of interactive applications. This list may be stored on a storage means 9. The processor 7 is further operative to create a new entry in said list of interactive applications, said new entry comprising an identifier of said first broadcast channel and an identifier of said first interactive application. The processor 7 is further operative to use said user input receiving means 5 to allow said user to select a second interactive application from said list of interactive applications, said list of interactive applications comprising said first application and at least one further interactive application broadcast on a further broadcast channel different from said first broadcast channel. The processor 7 is further operative to obtain a channel identifier associated with said second interactive application from said list of interactive applications. The processor 7 is further operative to obtain an application identifier associated with said second interactive application from said list of interactive applications. The processor 7 is further operative to use said tuner 3 to tune to said second broadcast channel using said channel identifier. The processor 7 is further operative to activate said second interactive application on said tuned second broadcast channel using said application identifier.

The device 1 may be a television or digital television receiver, for example. The tuner 3 may be coupled to a satellite dish 17, a cable network, an IPTV network or a terrestrial antenna, for example. The tuner 3 may be able to tune to signals conforming to DVB-T(2), DVB-C(2) and/or DVB-S(2) standards, for example. Alternatively or additionally, the tuner 3 may be an IPTV tuner capable of receiving programs from an IPTV network, for example. The user input receiving means 5 may be a receiver of IR or RF signals from a remote control 13 and/or may comprise buttons and/or a touchscreen, for example. The processor 7 may be a general-purpose processor or an application-specification processor, for example. The processor 7 may be able to execute software for running interactive applications that conform to the HbbTV standard and/or may be able to execute software for running applications that conform to another interactive application standard (e.g. MHEG-5, GINGA or MHP). The interactive applications may comprise video-on-demand, catch-up TV, gaming, news and/or weather applications, for example. The storage means 9 may be part of the device 1 or may be located on a server, for example. The storage means 9 may comprise a hard disk or a solid state memory, for example. The device 1 may comprise an output port 11. The output port 11 may be coupled to a Television 15, for example. The output port 11 may be an HDMI connector, for example.

In an embodiment, said identifier of said first broadcast channel comprises tuning parameters which include frequency, bandwidth, modulation, symbol rate, ONID, TSID and Service_id for cable and terrestrial channels. Said tuning parameters further include orbital position and polarization for satellite channels. In the same or in another embodiment, said identifier of said first interactive application comprises contents of an application_identifier() field within the application_information_section() signaled within the Program Map Table of said first broadcast channel. In the same or in another embodiment, said new entry further comprises at least one of a graphical representation of the opening page of said first interactive application and a logo of said first broadcast channel. The graphical representation of the opening page may be captured from the video frame buffer, for example. The logo of said first broadcast channel may be automatically detected and captured using video content analysis, may be received as part of electronic program guide data or may be obtained from a server, for example.

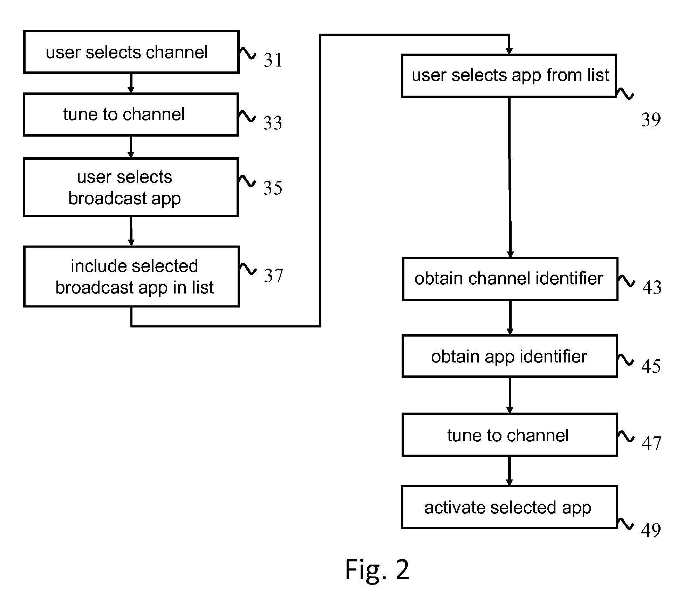

The method for activating interactive applications comprises a step 31 of allowing a user to select a first broadcast channel, see Fig.2. The method further comprises a step 33 of tuning to said first broadcast channel. The method further comprises a step 35 of allowing a user to select a first interactive application being broadcast on said first broadcast channel for inclusion in a list of interactive applications. For example, an application can be selected via an "'Options" remote control button and a "Store application" option in the option list. The method further comprises a step 37 of creating a new entry in said list of interactive applications, said new entry comprising an identifier of said first broadcast channel and an identifier of said first interactive application. The method further comprises a step 39 of allowing said user to select a second interactive application from said list of interactive applications, said list of interactive applications comprising said first application and at least one further interactive application broadcast on a further broadcast channel different from said first broadcast channel. The method further comprises a step 43 of obtaining a channel identifier associated with said second interactive application from said list of interactive applications. The method further comprises a step 45 of obtaining an application identifier associated with said second interactive application from said list of interactive applications. The method further comprises a step 47 of tuning to said second broadcast channel using said channel identifier. The method further comprises a step 49 of activating said second interactive application on said tuned second broadcast channel using said application identifier. Steps 43, 45, 47 and 49 do not need to be performed exactly in the order shown in Fig.2, as long as step 43 is performed before step 47, step 45 is performed before step 49 and step 47 is performed before step 49.

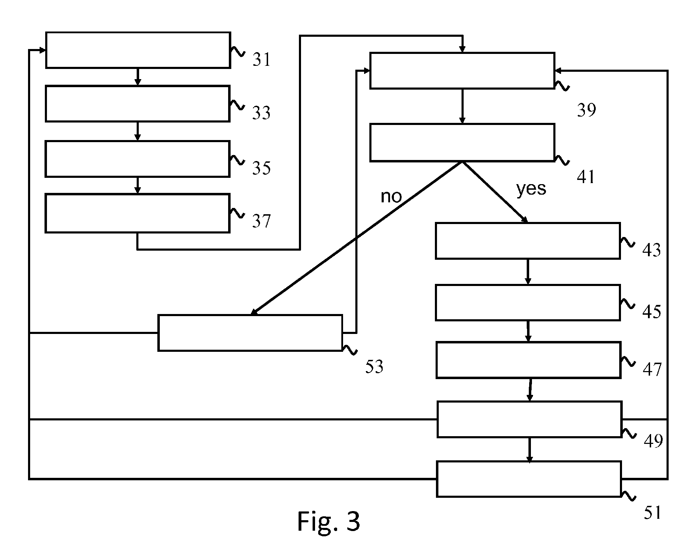

Fig.3 is a flow diagram of an embodiment of the method of the invention. In this embodiment, the list of applications can further comprise non-broadcast applications and the method further comprises a step 41 of determining whether said second interactive application is a broadcast interactive application. Many Internet-connected TVs allow users to select downloaded applications from a list and/or to select Internet applications (e.g. conforming to the Smart TV Alliance standard) from a list in order to activate them. One or both of these lists can be combined with the list of broadcast applications. If it is determined that said second interactive application is a broadcast interactive application, then steps 43, 45, 47 and 49 are performed. In this embodiment, step 47 is performed after step 45. In another embodiment, step 47 may be performed before step 45 or steps 45 and 47 may be performed in parallel. If it is determined that said second interactive application is not a broadcast interactive application, then a step 53 of activating said non-broadcast second interactive application is performed. An entry for a non-broadcast second interactive application in the list of applications may comprise a location on the Internet (e.g. for Smart TV Alliance compliant applications) or may comprise a location of one or more files on the device itself (e.g. for downloaded or pre-loaded applications).

In this embodiment, the method further comprises a step 51 of detecting whether tuning parameters of said first broadcast channel have changed and updating said identifier of said first broadcast channel when said tuning parameters of said first broadcast channel have changed. This step may be omitted if it is not possible to detect whether tuning parameters of said first broadcast channel have changed. After an interactive application has been activated, the user may select another application from the list in step 39 or may select another application for inclusion in the list in step 31.

The method of the invention may be performed by a processor of a device for activating interactive applications and/or by software (for) running on a processor of a device for activating interactive applications.

While the invention has been described in connection with preferred embodiments, it will be understood that modifications thereof within the principles outlined above will be evident to those skilled in the art, and thus the invention is not limited to the preferred embodiments but is intended to encompass such modifications. The invention resides in each and every novel characteristic feature and each and every combination of characteristic features. Reference numerals in the claims do not limit their protective scope. Use of the verb "to comprise" and its conjugations does not exclude the presence of elements other than those stated in the claims. Use of the article "a" or "an" preceding an element does not exclude the presence of a plurality of such elements.

'Means', as will be apparent to a person skilled in the art, are meant to include any hardware (such as separate or integrated circuits or electronic elements) or software (such as programs or parts of programs) which perform in operation or are designed to perform a specified function, be it solely or in conjunction with other functions, be it in isolation or in co-operation with other elements. The invention can be implemented by means of hardware comprising several distinct elements, and by means of a suitably programmed computer. The mere fact that certain measures are recited in mutually different dependent claims does not indicate that a combination of these measures cannot be used to advantage. 'Software' is to be understood to mean any software product stored on a computer-readable medium, such as a floppy disk, downloadable via a network, such as the Internet, or marketable in any other manner.

## Claims

1. A device (1) for activating interactive applications, comprising:
a tuner (3) for tuning to a broadcast channel;
a user input receiving means (5); and
a processor (7) operative to:
- use said user input receiving means (5) to allow a user to select a first broadcast channel;
- use said tuner (3) to tune to said first broadcast channel;
- use said user input receiving means (5) to allow a user to select a first interactive application being broadcast on said first broadcast channel for inclusion in a list of interactive applications;
- create a new entry in said list of interactive applications, said new entry comprising an identifier of said first broadcast channel and an identifier of said first interactive application;
- use said user input receiving means (5) to allow said user to select a second interactive application from said list of interactive applications, said list of interactive applications comprising said first application and at least one further interactive application broadcast on a further broadcast channel different from said first broadcast channel;
- obtain a channel identifier associated with said second interactive application from said list of interactive applications;
- obtain an application identifier associated with said second interactive application from said list of interactive applications;
- use said tuner (3) to tune to said second broadcast channel using said channel identifier; and
- activate said second interactive application on said tuned second broadcast channel using said application identifier.

2. A device as claimed in claim 1, wherein said identifier of said first broadcast channel comprises tuning parameters which include frequency, bandwidth, modulation, symbol rate, ONID, TSID and Service_id.

3. A device as claimed in claim 2, wherein said tuning parameters further include orbital position and polarization.

4. A device as claimed in any of claims 1 to 3, wherein said identifier of said first interactive application comprises contents of an application_identifier() field within the application_information_section() signaled within the Program Map Table of said first broadcast channel.

5. A device as claimed in any of claims 1 to 3, wherein said new entry further comprises at least one of a graphical representation of the opening page of said first interactive application and a logo of said first broadcast channel.

6. A device as claimed in any of claims 1 to 3, wherein said processor (7) is further operative to detect whether tuning parameters of said first broadcast channel have changed and update said identifier of said first broadcast channel when said tuning parameters of said first broadcast channel have changed

7. A method of activating interactive applications, comprising the steps of:
- allowing (31) a user to select a first broadcast channel;
- tuning (33) to said first broadcast channel;
- allowing (35) a user to select a first interactive application being broadcast on said first broadcast channel for inclusion in a list of interactive applications;
- creating (37) a new entry in said list of interactive applications, said new entry comprising an identifier of said first broadcast channel and an identifier of said first interactive application;
- allowing (39) said user to select a second interactive application from said list of interactive applications, said list of interactive applications comprising said first application and at least one further interactive application broadcast on a further broadcast channel different from said first broadcast channel;
- obtaining (43) a channel identifier associated with said second interactive application from said list of interactive applications;
- obtaining (45) an application identifier associated with said second interactive application from said list of interactive applications,
- tuning (47) to said second broadcast channel using said channel identifier; and
- activating (49) said second interactive application on said tuned second broadcast channel using said application identifier.

8. A method as claimed in claim 7, wherein said identifier of said first broadcast channel comprises tuning parameters which include frequency, bandwidth, modulation, symbol rate, ONID, TSID and Service_id.

9. A method as claimed in claim 8, wherein said tuning parameters further include orbital position and polarization.

10. A method as claimed in any of claims 7 to 9, wherein said identifier of said first interactive application comprises contents of an application_identifier() field within the application_information_section() signaled within the Program Map Table of said first broadcast channel.

11. A method as claimed in any of claims 7 to 10, wherein said new entry further comprises at least one of a graphical representation of the opening page of said first interactive application and a logo of said first broadcast channel.

12. A method as claimed in any of claims 7 to 11, further comprising the step of detecting (51) whether tuning parameters of said first broadcast channel have changed and updating said identifier of said first broadcast channel when said tuning parameters of said first broadcast channel have changed.

13. A computer program product enabling a programmable device to perform the method of any of claims 7 to 12.
